# EUROPEAN PATENT APPLICATION

(11) **EP 2 933 705 A1**
(43) Date of publication of application: **21.10.2015**
(21) Application number: 15163727.9
(22) Date of filing: 15.04.2015
(51) Int. Cl.: G06F 1/18

(54) **DATA TRANSFER INTERFACE**

(30) Priority: 15.04.2014 US 201414252884
(71) Applicant: Goodrich Corporation, Charlotte, NC 28217 (US)
(72) Inventor: Kitaoka, Yasuhide, Hacienda Heights, CA 91745 (US)
(74) Representative: Hall, Matthew Benjamin

(57) **Abstract**

A data transfer interface (100) includes a circuit card assembly (CCA) (100) including a mounting surface, a data transfer port (103) mounted to the mounting surface of CCA, and a support (107) that is through-hole mounted to the CCA and is engaged to the data transfer port to reinforce the data transfer port from against detaching from the CCA.

## Description

### BACKGROUND

### 1. Field

The present disclosure relates to data transfer systems, more particularly to removable data transfer interfaces.

### 2. Description of Related Art

USB ports have been used as a means to transport data from one location to another in computer systems. For example, thumb drives and other similar external hard drives are being used increasingly as a means to quickly transfer data onto a tangible, transportable medium. Many of these portable systems use USB interface systems (e.g., USB 1.0, USB 2.0, USB 3.0) to transfer data from a first storage and/or data source to a second storage.

Many USB and similar interfaces generally include a female port soldered with surface mount technology (SMT) to a circuit card assembly (CCA). Repeated and/or forceful insertion and removal of a male end of a USB connector can cause the female port that is mounted to the CCA to break the connection holding the female port to the CCA, causing the USB device to stop functioning.

Such conventional methods and systems have generally been considered satisfactory for their intended purpose. However, there is still a need in the art for more robust CCA connection systems. The present disclosure provides solutions for this need.

### SUMMARY

In at least one aspect of this disclosure, a data transfer interface includes a circuit card assembly (CCA) including a mounting surface, a data transfer port mounted to the mounting surface of CCA, and a support that is through-hole mounted to the CCA and is engaged to the data transfer port to reinforce the data transfer port from against detaching from the CCA.

The data transfer port can be attached to the surface with any suitable type of attachment, including, but not limited to, surface mount technology (SMT). The CCA can include at least one support hole to which the support can be through-hole mounted. In some embodiments, the CCA includes four support holes to which the support can be through-hole mounted.

The support can include at least one support leg for each support hole. The at least one support leg is configured to enter the at least one support hole in the CCA. In some embodiments, the support can also include four support legs.

The support can be made of any suitable material, such as but not limited to, a metal. In some embodiments, the support is made of nickel coated steel.

The support can include at least two arms extending therefrom. The at least two arms can be opposed to apply a clamping force on the data transfer port.

In some embodiments, the data transfer port can be friction fit to the support. In some embodiments, the data transfer port can be fixedly attached to the support in any suitable manner.

The data transfer interface can be any USB interface (e.g., USB 1.0, USB 2.0, USB 3.0) or any other suitable type of interface.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below by way of example only, and with reference to certain figures, wherein:
Fig. 1 is a perspective view of an embodiment of a data transfer interface in accordance with this disclosure, showing a support through-hole mounted to the CCA and surrounding the data transfer port;
Fig. 2 is a bottom plan view of the CCA of Fig. 1 in accordance with this disclosure, showing support holes and surface mounts with the support and data transfer port removed; and
Fig. 3 is a cross-sectional side elevation view of an embodiment of a support in accordance with this disclosure.

### DETAILED DESCRIPTION

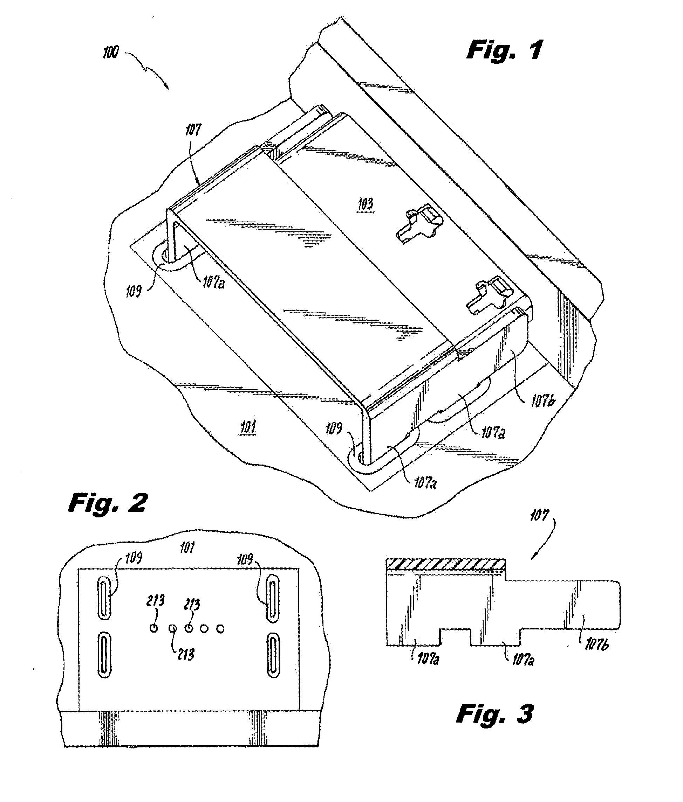

Reference will now be made to the drawings wherein like reference numerals identify similar structural features or aspects of the subject disclosure. For purposes of explanation and illustration, and not limitation, a perspective view an embodiment of a data transfer interface in accordance with this disclosure is shown in Fig. 1 and is designated generally by reference character 100. The systems and methods described herein can be used to strengthen data transfer interfaces to reduce and/or prevent damage of electrical hardware and/or connections.

Referring to Figs. 1-3, in at least one aspect of this disclosure, a data transfer interface 100 includes a circuit card assembly (CCA) 101 which has a surface that a data transfer port 103 is mounted on. The CCA 101 can be any suitable circuit board with any suitable electrical circuit or component defined thereby.

The data transfer port 103 can be mounted on the surface of the CCA 101 in any suitable manner, including, but not limited to a surface mounting technology (SMT). For example, the data transfer port 103 may include a plurality of connectors that are configured to be soldered to surface mounts 213 to both attach the data transfer port 103 to the CCA 101 and connect the data transfer port 103 to the electrical circuit allowing for data to be transfer through the data transfer port 103.

A support 107 can be mounted to the CCA 101 to reinforce the data transfer port 103 such that the support 107 is configured to restrict and/or prevent the data transfer port from moving relative to the CCA. The support 107 can be of any suitable shape and size.

The support is through-hole mounted to the CCA. In this respect, the CCA can include at least one support hole 109. As shown in Figs. 1-3, in some embodiments, the CCA can have four support holes 109. However, the support 107 can be fixed to the CCA in any other suitable manner that provides added support for the data transfer port 103.

The support 107 includes at least one support leg 107a for each support hole 109. In some embodiments, the support 107 can include four support legs 107a. As shown, each support leg 107a is configured to enter a support hole 109 in the CCA for through-hole mounting. Those skilled in the art will readily appreciate that any suitable number of support holes and legs can be used without departing from the scope of this disclosure.

The support 107 can also include at least two arms 107b. The at least two arms 107b can be configured to apply a clamping force against the data transfer port 103 or otherwise be dimensioned to contain the data transfer port 103.

In some embodiments, the data transfer port 103 can be friction fit to the support 107. It is also contemplated that the data transfer port 103 can be fixedly attached to the support in any suitable manner. For example, the support 107 can be soldered to the data transfer port 103.

The support 107 can be made of any suitable material, such as but not limited to, a metal. In some embodiments, the support 107 is made of nickel coated steel. Support 107 can be electrically connected to the data transfer port 103 to enhance grounding, for example.

In some embodiments, the data transfer interface is any suitable USB interface (e.g., USB 1.0, USB 2.0, USB 3.0). In this respect, the USB port (e.g., a USB 3.0 port) can be mounted to a CCA 101 with a surface mount but be supported by the support 107 such that repeated insertion and removal of the opposite port connector will not break the surface mount connection of the USB port.

Such interfaces 100 as disclosed herein can be used in environments where ruggedized electronics are required. For example, the interface 100 can be used with a video system connected to an aircraft and/or a tank where repeated insertion and removal occur with abrasive force.

The methods and systems of the present disclosure, as described above and shown in the drawings, provide for a data transfer interface with superior properties including robustness. While the apparatus and methods of the subject disclosure have been shown and described with reference to embodiments, those skilled in the art will readily appreciate that changes and/or modifications may be made thereto without departing from the scope of the subject disclosure as set out in the claims.

Thus in at least the preferred embodiments of the present invention, there is provided a USB interface, comprising: a circuit card assembly (CCA) including amounting surface; a data transfer port surface mounted to the mounting surface of CCA; and a support that is through-hole mounted to the CCA and is engaged to the data transfer port to reinforce the data transfer port against detaching from the CCA. Preferably the data transfer port is attached to the surface with surface mount technology. Preferably the CCA includes at least one support hole to which the support is through-hole mounted.

## Claims

1. A data transfer interface (100), comprising:
a circuit card assembly (CCA) (101) including a mounting surface;
a data transfer port (103) mounted to the mounting surface of CCA; and
a support (107) that is through-hole mounted to the CCA and is engaged to the data transfer port to reinforce the data transfer port against detaching from the CCA.

2. The data transfer interface of claim 1, wherein the data transfer port is attached to the surface with surface mount technology.

3. The data transfer interface of claim 1 or 2, wherein the CCA includes at least one support hole (109) to which the support is through-hole mounted.

4. The data transfer interface of claim 3, wherein the support include at least one support leg (107a) for each support hole, wherein the at least one support leg is configured to enter the at least one support hole.

5. The data transfer interface of claim 3, wherein the CCA includes four support holes to which the support is through-hole mounted.

6. The data transfer interface of claim 5, wherein the support includes a support leg (107a) for each of the four support holes.

7. The data transfer interface of any preceding claim, wherein the support is made of metal.

8. The data transfer interface of any preceding claim, wherein the support is made of a nickel coated steel.

9. The data transfer interface of any preceding claim, wherein the support includes at least two arms (107b) extending therefrom.

10. The data transfer interface of claim 9, wherein the at least two arms are configured to apply a clamping force on the data transfer port.

11. The data transfer interface of any preceding claim, wherein the data transfer port is friction fit to the support.

12. The data transfer interface of any of claims 1 to 10, wherein the data transfer port is fixedly attached to the support.

13. The data transfer interface of any preceding claim, wherein the data transfer interface is a USB interface.
